Europäisches Patentamt

European Patent Office

Office européen des brevets

(11) Veröffentlichungsnummer : **0 030 047**
**B1**

(12) **EUROPÄISCHE PATENTSCHRIFT**

(45) Veröffentlichungstag der Patentschrift :
**01.06.83**

(51) Int. Cl.³ : **B 23 Q 17/16, G 01 B 21/22**

(21) Anmeldenummer : **80201055.3**

(22) Anmeldetag : **07.11.80**

(54) **Vorrichtung zum Positionieren eines Werkstückes.**

(30) Priorität : **04.12.79 CH 10764/79**

(43) Veröffentlichungstag der Anmeldung :
**10.06.81 Patentblatt 81/23**

(45) Bekanntmachung des Hinweises auf die Patenterteilung : **01.06.83 Patentblatt 83/22**

(84) Benannte Vertragsstaaten :
**AT CH DE FR GB IT LI SE**

(56) Entgegenhaltungen :
**DE B 1 247 807**
**FR A 772 514**
**GB A 938 947**
**GB A 2 000 867**
**US A 2 376 303**

(73) Patentinhaber : **Werkzeugmaschinenfabrik Oerlikon-Bührle AG**
**Birchstrasse 155**
**CH-8050 Zürich (CH)**

(72) Erfinder : **Jordan, Armin**
**Hofwiesenstrasse 220** ·
**CH-8057 Zürich (CH)**

Jouve, 18, rue St-Denis, 75001 Paris, France

## Vorrichtung zum Positionieren eines Werkstückes

Die Erfindung betrifft eine Vorrichtung zum Positionieren eines Werkstückes auf einer Werkzeugmaschine, insbesondere einer Horizontalbohrmaschine mit einer Arbeitsspindel, die auf einem ersten Schlitten in Y-Richtung verschiebbar ist, mit einem Drehtisch, der auf einem zweiten Schlitten in X-Richtung verschiebbar ist, wobei in der Ausgangsstellung des zweiten Schlittens die Achse des Drehtisches die Achse der Arbeitsspindel schneidet, mit einer ersten Messeinrichtung zum Drehen des Drehtisches um jeden gewünschten Winkel und mit einer zweiten Messeinrichtung zum Verschieben des Drehtisches um jeden gewünschten Betrag in X-Richtung.

Es hat sich gezeigt, dass für gewisse Aufgaben die bekannte Anordnung der genannten beiden Messeinrichtungen an Horizontalbohrmaschinen die Anforderungen nicht entsprechen. Dies ist insbesondere der Fall, wenn an einem Werkstück eine durchgehende Bohrung erzeugt werden soll, wobei ein Teil der Bohrung von der einen Seite des Werkstückes und der andere Teil der Bohrung von der gegenüberliegende Seite des Werkstückes erzeugt wird und beide Teile der Bohrung miteinander fluchten. Insbesondere ist nicht gewährleistet, dass mit Hilfe der zweiten Messeinrichtung der Schlitten derart in seine Ausgangsstellung geschoben werden kann, dass sich die Arbeitsspindelachse und die Drehtischachse tatsächlich schneiden.

Mit den erwähnten beiden Messeinrichtungen zum Positionieren eines Werkstückes ist es daher ohne zusätzliche Messeinrichtungen nicht möglich, bei der genannten Bohrung beide Teile der Bohrung so genau zueinander auszurichten, dass die beiden Teile der Bohrung genau miteinander fluchten.

Die Aufgabe, welche mit der vorliegenden Erfindung gelöst werden soll, besteht in der Schaffung einer Vorrichtung zum Positionieren eines Werkstückes, mit der die beiden Teile einer Bohrung mit der gewünschten Genauigkeit zueinander ausgerichtet werden können.

Die erfindungsgemässe Vorrichtung ist gekennzeichnet durch eine dritte Messeinrichtung, mit der sich einzelne Winkel, insbesondere 0°, 90°, 180° und 270° genauer als mit de ersten Messeinrichtung einstellen lassen und durch eine vierte Messeinrichtung, welche eine Lageänderung der Arbeitsspindelachse in X-Richtung misst und somit eine Abweichun der Arbeitsspindelachse von der Drehtischachse also von der genannten Ausgangsstellung, feststellt, so dass sich zusammen mit der zweiten Messeinrichtung die Drehtischachse gegenüber der Arbeitsspindelachse auf den gemeinsamen Schnittpunkt einstellen lässt.

Ein Ausführungsbeispiel der erfindungsgemässen Vorrichtung zum Positionieren eines Werkstückes ist im folgenden anhand der beigefügten Zeichnung ausführlich beschrieben. Es zeigt:

Figur 1 eine perspektivische Darstellung einer Horizontalbohrmaschine

Figur 2 eine Ansicht dieser Maschine von oben

Figur 3 eine Messeinrichtung dieser Maschine in Seitenansicht

Figur 4 eine Ansicht eines Spindelstockes und einen Teil eines zugehörigen Ständers

Figur 5 eine Ansicht der in Fig. 4 dargestellten Teile von oben.

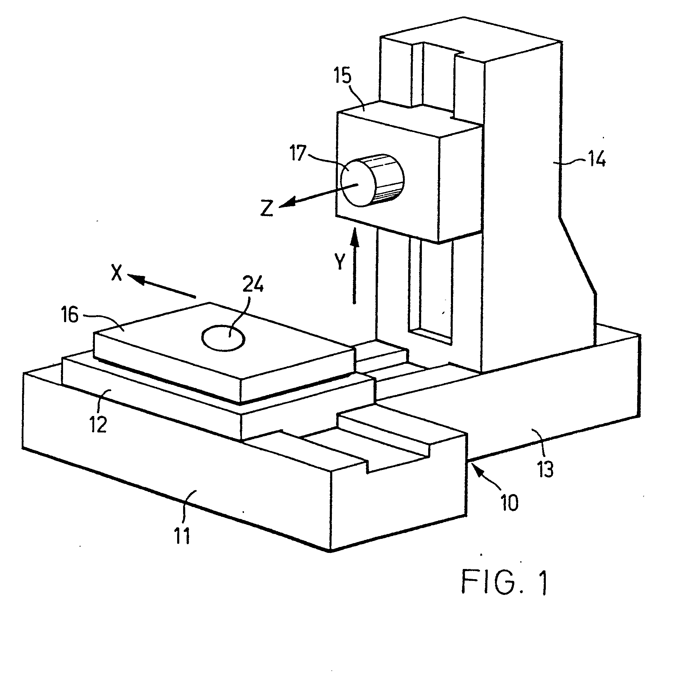

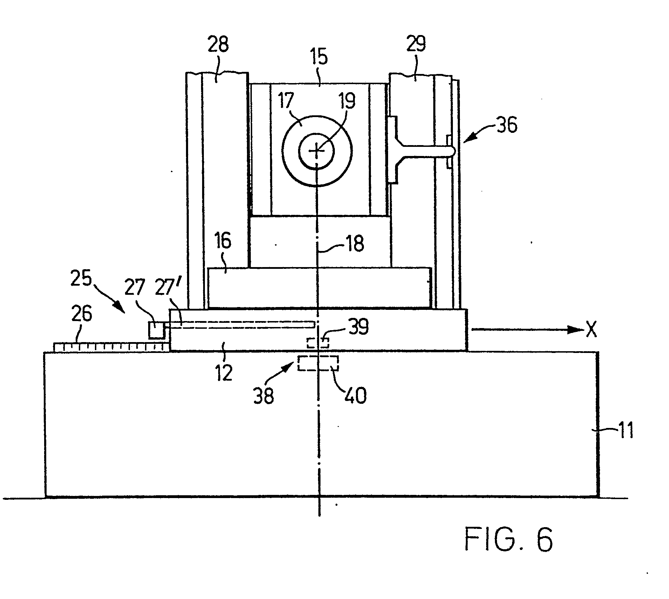

Figur 6 eine Ansicht der Maschine von vorne Gemäss Fig. 1 weist die Horizontalbohrmaschine ein T-förmiges Maschinenbett 10 auf. Auf dem vorderen Teil 11 des Maschinenbettes 10 befindet sich ein erster Schlitten 12 und auf dem hinteren Teil 13 des Maschinenbettes 10 befindet sich ein verschiebbarer Ständer 14 auf dem ein zweiter Schlitten 15 vertikal verschiebbar angeordnet ist. Auf dem ersten Schlitten 12 ist ein Drehtisch 16 um eine vertikale Achse drehbar gelagert und im zweiten Schlitten 15 isteine Arbeitsspindel 17 um eine horizontale Achse drehbar gelagert. Der erste Schlitten 12 ist — wie durch einen Pfeil X angedeutet — in X-Richtung verschiebbar und der zweite Schlitten 15 ist — wie ebenfalls durch einen Pfeil Y angedeutet — in Y-Richtung verschiebbar. Eine Z-Achse ist ebenfalls durch einen Pfeil Z angedeutet und fällt mit der Achse der Arbeitsspindel 17 zusammen.

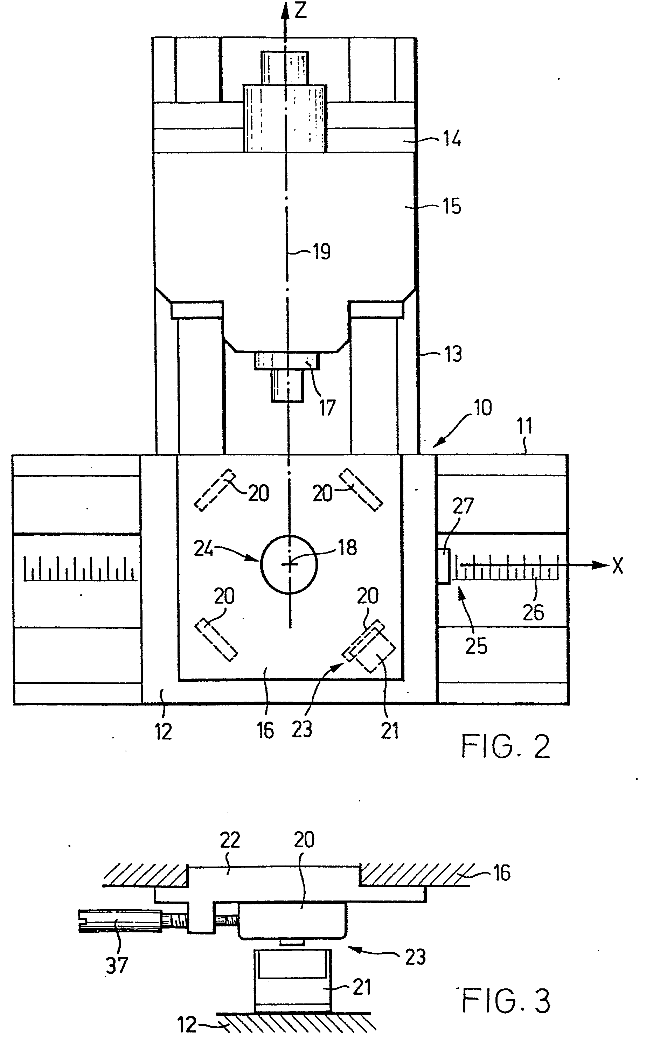

Wie aus Fig. 2 ersichtlich ist, schneidet eine Achse 18 des Drehtisches 16, eine Achse 19 der Arbeitsspindel 17, wenn der Schlitten 12 auf dem vorderen Teil 11 des Maschinenbettes 10 in X-Richtung in seine Ausgangslage geschoben wird.

An der unteren Seite des Drehtisches 16 sind, gemäss Fig. 2 und 3 vier Messwertgeber 20 befestigt, ausserdem ist am ersten Schlitten 12, ein Messwertsender 21 befestigt. Der Messwertgeber 20 ist verschiebbar auf einem Träger 22 angeordnet und kann mit Hilfe einer Stellschraube 37 verschoben werden. Diese Stellschraube 37 weist in an sich bekannter Weise zwei Gewinde mit unterschiedlicher Steigung auf, wodurch eine sehr genaue Positionierung des Messwertgebers 20 mit Hilfe der Stellschraube 37 möglich ist. Die vier Messwertgeber 20 sind in den vier Ecken des rechteckigen oder quadratischen Tisches angeordnet, damit der Abstand von der Drehtischachse 18 möglichst gross ist, da die Genauigkeit einer Winkelmessung wesentlich von diesem Abstand abhängt. Sowohl die Ausbildung des Messwertgebers 20, als auch die Ausbildung des Messwertsenders 21 ist an sich bekannt und muss daher nicht näher beschrieben werden. Mit Hilfe dieser Messeinrichtung 23, bestehend aus vier Messwertgebern 20 und einem einzigen Messwertsender 21 ist eine Drehung des Drehtisches 16 um jeweils 90° mit der gewünschten Genauigkeit möglich. Da aber jeder andere Winkel sich mit dieser Messeinrichtung 23 nicht einstellen lässt, ist ausserdem eine zusätzliche an sich bekannte weitere Messeinrichtung 24 im Zentrum des Drehtisches 16 angeordnet. Diese weitere Messeinrichtung 24, mit der sich der Drehtisch 16 um jeden beliebigen Winkel drehen lässt, ist in der Zeichnung lediglich schematisch durch einen Kreis angedeutet. Da mit dieser Messeinrichtung 24 verhältnismässig nahe bei der Drehachse 18 gemessen wird, ist die Genauigkeit der Messung entsprechend dem kleineren Abstand zwischen Messeinrichtung 24 und Drehachse 18 weniger genau.

Mit den beschriebenen beiden Messeinrichtungen 23 und 24 können die vier Winkel 0°, 90°, 180° und 270° wesentlich genauer gemessen werden, als die übrigen dazwischenliegenden Winkel. Eine solche Kombination von zwei Messeinrichtungen 23, 24 ist wesentlich billiger als eine einzige Messeinrichtung mit der alle Winkel mit der grösseren Genauigkeit einstellbar sind.

Zur Verschiebung des Schlittens in X-Richtung ist noch eine weitere Messeinrichtung 25 angeordnet, die aus einem am vorderen Teil 11 des Maschinenbettes 10 befestigten Masstab 26 und einem am ersten Schlitten 12 befestigten Messwertsender 27 besteht, wobei der Masstab 26 einen Messwertgeber darstellt. Auch diese Messeinrichtung 25 ist an sich bekannt und braucht daher hier nicht näher beschrieben zu werden. Vorzugsweise ist der Massstab so angeordnet, dass bei der Ausgangsstellung des ersten Schlittens 12, d.h. wenn Drehtischachse 18 und Arbeitsspindelachse 19 sich schneiden, der Messwertsender 27 den Wert « 0 » (Null) anzeigt.

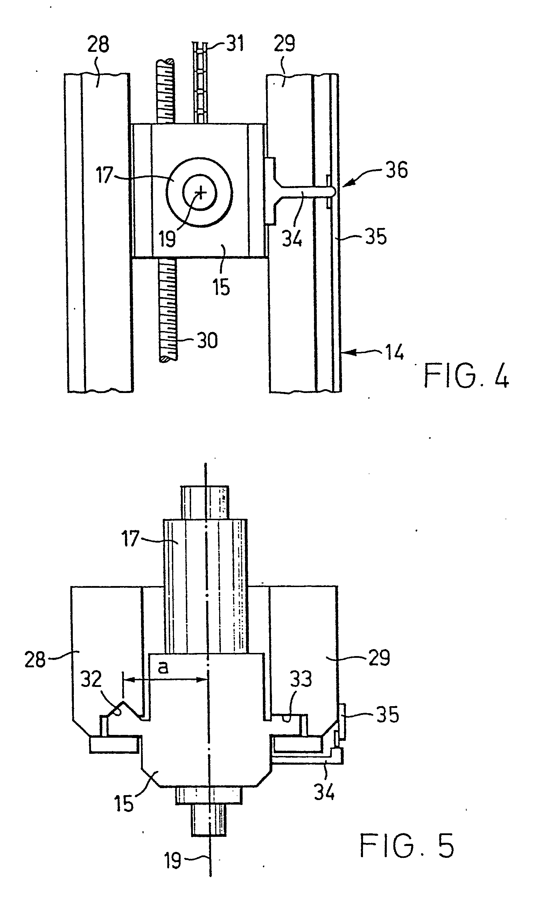

Gemäss Fig. 4 und 5 weist der Ständer 14 zwei Schienen 28 und 29 auf, zwischen denen sich der zweite Schlitten 15 mit der Arbeitsspindel 17 befindet. Die Schienen 28 und 29 können auch als Säulen bezeichnet werden und der zweite Schlitten 15 wird auch als Spindelstock bezeichnet. Zum Heben und Senken des zweiten Schlittens 15 ist eine Kugelspindel 30 vorhanden. Der Schlitten 15 ist über eine Entlastungskette 31, die über eine am oberen Ende des Ständers 14 angeordnete, nicht dargestellte Umlenkrolle geführt ist, mit einem nicht dargestellten Gegengewicht verbunden zur Entlastung der Kugelspindel 30. Der zweite Schlitten 15 ist auf der einen Schiene 28 in einer V-förmigen Nut 32 geführt und auf der anderen Schiene 29 an einer Führungsfläche 33, wie aus Fig. 5 ersichtlich ist.

Gemäss Fig. 4 und 5 ist am zweiten Schlitten 15 ein weiterer Messwertsender 34 befestigt, der mit einem Messwertgeber 35 zusammenwirkt. Dieser Messwertgeber 35, in Form eines präzisen geraden Stabes, ist an der Schiene 29 befestigt. Diese Messeinrichtung 36, bestehend aus dem Messwertsender 34 und dem Messwertgeber 35, dient dazu, Verschiebungen der Arbeitsspindelachse 19 in X-Richtung anzuzeigen und zur Steuerung der Maschine zu benutzen. Solche Verschiebungen der Arbeitsspindelachse 19 in X-Richtungen treten aus verschiedenen Gründen auf. Insbesondere bewirkt eine Erwärmung des Schlittens 15 eine solche Verschiebung in X-Richtung, da die V-Nut 32 im Abstand a (Fig. 5) in X-Richtung, da die V-Nut 32 im Abstand a (Fig. 5) in X-Richtung gesehen von der Achse 19 angeordnet ist. Dehnt sich der Schlitten 15 aus, so verschiebt sich die Achse 19 nach rechts in Fig. 5. Ausserdem steht die Schiene 28 praktisch nicht präzise vertikal. Dies hat zur Folge, dass bei einer Verschiebung des Schlittens 15 in Y-Richtung ein Auswandern der Achse 19 in X-Richtung, d. h. nach rechts oder links in Fig. 5 nicht zu vermeiden ist.

Mit Hilfe der zuletzt beschriebenen Messeinrichtung 36 kann diese Verschiebung der Arbeitsspindelachse in X-Richtung gemessen werden. Das Messergebnis wird dazu verwendet, den ersten Schlitten 12 um den gemessenen Betrag in X-Richtung zu verschieben, damit sich Drehtischachse 18 und Arbeitsspindelachse 19 wieder in einem gemeinsamen Punkt schneiden.

Die Messeinrichtung 36 wird wiederum als ansich bekannt vorausgesetzt und daher hier nicht näher beschrieben. Vorzugsweise wird der Messwerksender 34 genau gleich ausgebildet wie der weiter oben erwähnte Messwertsender 21. Der Messwertgeber 35 in Form eines Stabes besteht vorzugsweise aus einer Anzahl im Abstand voneinander in einer Ebene angeorneten Abschnitten. Für sehr genaue Messungen kann dieser Stab durch einen Lichtstrahl (Laserstrahl) ersetzt werden.

Gemäss Fig. 6 ist noch eine fünfte Messeinrichtung 38 vorhanden, die genau wie die vierte Messeinrichtung 36 aus einem Messwertgeber 39 und einem Messwertsender 40 besteht. Der Messwertgeber 39 ist am Schlitten 12 befestigt und der Messwertsender 40 ist am vorderen Teil 11 des Maschinenbettes 10 befestigt. Sowohl der Messwertgeber 39 als auch der Messwertsender 40 sind genau in der Drehachse 18 des Drehtisches 16 angeordnet und zeigen den Wert « 0 » an, wenn die Drehtischachse 18 und Spindelachse 19 sich schneiden, wie aus Fig. 6 ersichtlich ist.

In dieser Stellung des Schlittens 12 auf dem vorderen Teil 11 des Maschinenbettes 10 zeigt auch die Messeinrichtung 25 den Wert « 0 » an, d.h. der Messwertsender 27 befindet sich genau über der Nullstelle des Massstabes 26. Vorzugsweise ist der Messwertsender 27 gemäss Fig. 6 mit Hilfe eines Glasstabes 27' im Bereich der Drehtischachse 18 am Schlitten 12 befestigt. Der Glasstab 27' besitzt einen kleinen Wärmeausdehnungskoeffizienten und gewährleistet daher eine genaue Messung.

Die beiden Messeinrichtungen 36 und 38 sind mit einer nicht näher beschriebenen numerischen Steuereinrichtung verbunden, welche bewirkt, dass bei jeder Verschiebung der Arbeitsspindelachse 19 in X-Richtung der erste Schlitten 12 um den gleichen Betrag verschoben wird, damit sich die Drehtischachse 18 mit der Arbeitsspindelachse 19 wieder schneiden. Vorzugsweise zeigt in dieser Stellung die eine Messeinrichtung 36 z. B. einen positiven Wert an und die andere Messeinrichtung 38 einen gleich grossen negativen Wert, derart, dass sich die beiden Werte in der Steuereinrichtung gegenseitig aufheben, d. h. gemeinsam den Wert « 0 » anzeigen. Wenn sich also die Drehtischachse 18 und die Arbeitsspindelachse 19 schneiden, dann wird in der Steuereinrichtung der Wert « 0 » angezeigt.

Zusammenfassend sind somit folgende vier Messeinrichtungen an der Horizontalbohrmaschine angeordnet :

die erste Messeinrichtung 24, die zum Drehen des Drehtisches 16 um jeden gewünschten Winkel dient,

die zweite Messeinrichtung 25, die zum Verschieben des ersten Schlittens 12 mit dem Drehtisch 16 um jeden gewünschten Betrag in X-Richtung dient,

die dritte Messeinrichtung 23 mit der sich einzelne Winkel, insbesondere 0°, 90°, 180° und 270° genauer als mit der ersten Messeinrichtung 24 einstellen lassen, und

die vierte Messeinrichtung 36, welche die genannte Ausgangsstellung des ersten Schlittens 12 gegenüber der Arbeitsspindel 17 misst und mit der sich die Drehtischachse 18 gegenüber der Arbeitsspindelache 19 mit der zweiten Messeinrichtung 25 auf den gemeinsamen Schnittpunkt einstellen lässt.

Die Wirkungsweise der beschriebenen Vorrichtung zum Positionieren eines Werkstückes auf einer Werkzeugmaschine ist wie folgt :

Es soll z. B. bei einem verhältnismässig grossen Gehäuse an zwei gegenüberliegenden Wänden je eine Bohrung ausgedreht werden, wobei diese beiden Bohrungen miteinander fluchten sollen, d. h. die Achsen der beiden Bohrungen sollen zusammenfallen. Damit die beiden Bohrungsachsen zusammenfallen, sind zwei Bedingungen zu erfüllen :

a) die beiden Bohrungsachsen müssen genau die gleiche Richtung im Gehäuse haben,

b) die beiden Bohrungsachsen dürfen nicht zueinander versetzt sein.

Bei einem verhältnismässig grossen Gehäuse ist es nicht möglich, beide Bohrungen in einem Arbeitsgang herzustellen, dies bedeutet : Nach dem Ausdrehen der ersten Bohrung muss das Werkstück mit Hilfe des Drehtisches 16 genau um 180° gedreht werden. Für diese genaue Drehung um 180° genügt die erste Messeinrichtung 24 nicht. Diese Drehung kann nur mit der dritten Messeinrichtung 23 durchgeführt werden.

Wenn sich vor der Drehung des Werkstückes um 180° die Drehtischachse 18 und die Arbeitsspindelachse 19 nicht in einem Punkte schneiden, dann sind die beiden Bohrungsachsen um einen Betrag zueinander versetzt, der doppelt so gross ist, als der Abstand zwischen Drehtischachse 18 und Arbeitsspindelachse 19. Die zweite Messeinrichtung 25 gewährleistet nicht, dass sich Arbeitsspindelachse 19 und Drehtischachse 18 tatsächlich schneiden. Daher ist die vierte Messeinrichtung 36 notwendig.

## Ansprüche

1. Vorrichtung zum Positionieren eines Werkstückes auf einer Werkzeugmaschine, insbesondere einer Horizontalbohrmaschine, mit einem Drehtisch (16), der auf einem ersten Schlitten (12) in X-Richtung verschiebbar ist, mit einer Arbeitsspindel (17), die auf einem zweiten Schlitten (15) in Y-Richtung verschiebbar ist, wobei in der Ausgangsstellung des ersten Schlittens (12) die Drehtischachse (18) sich mit der Arbeitsspindelachse (19) schneidet, mit einer ersten Messeinrichtung (24) zum Drehen des Drehtisches (16) um jeden gewünschten Winkel und mit einer zweiten Messeinrichtung (25) zum Verschieben des Drehtisches (16) um jeden gewünschten Betrag in X-Richtung, gekennzeichnet durch eine dritte Messeinrichtung (23), mit der sich einzelne Winkel, insbesondere 0°, 90°, 180° und 270° genauer als mit der ersten Messeinrichtung (24) einstellen lassen und durch eine vierte Messeinrichtung (36), welche eine Lageänderung der Arbeitsspindelachse (19) in X-Richtung misst und somit eine Abweichung der Arbeitsspindelachse (19) von der Drehtischachse (18) also von der genannten Ausgangsstellung, feststellt, so dass sich zusammen mit der zweiten Messeinrichtung (25) die Drehtischachse (18) gegenüber der Arbeitsspindelachse (19) auf den gemeinsamen Schnittpunkt einstellen lässt.

2. Vorrichtung nach Anspruch 1, dadurch gekennzeichnet, dass die dritte Messeinrichtung (23) vier Messwertgeber (20) aufweist, die gleichmässig am Umfang verteilt am Drehtisch (16) befestigt sind, sowie einen Messwertsender (21), der am ersten Schlitten (12) befestigt ist.

3. Vorrichtung nach Anspruch 1, dadurch gekennzeichnet, dass die vierte Messeinrichtung (36) einen am zweiten Schlitten (15) befestigten Messwertsender (34) aufweist, sowie einen Messwertgeber (35), der in Form eines Präzisionsstabes an einer Führungsschiene (29) für den zweiten Schlitten (15) befestigt ist.

4. Vorrichtung nach Anspruch 1, dadurch gekennzeichnet, dass eine fünfte Messeinrichtung (38) angeordnet ist mit einem am ersten Schlitten (12) befestigten Messwertgeber (39) und einem am Maschinenbett (10, 11) befestigten Messwertsender (40), wobei diese fünfte Messeinrichtung (38) elektrisch mit der zweiten Messeinrichtung (25) gekoppelt ist, um gemeinsam den Wert « 0 » anzuzeigen, wenn sich Drehtischachse (18) und Arbeitsspindelachse (19) schneiden.

## Claims

1. Apparatus for positioning a workpiece upon a machine tool, especially a horizontal drilling machine, comprising : a rotatable table (16) which is displaceable upon a first slide (12) in an X-direction, a work spindle (17), which is displaceable upon a second slide (15) in an Y-direction, whereby in a starting position of the first slide (12) the axis (18) of the rotatable table (16) intersects with the axis (19) of the work spindle, a first measuring device (24) for enabling rotating the rotatable table (16) through any desired angle, a second measuring device (25) for enabling displacing the rotatable table (16) through any desired amount in the X-direction, characterised by a third measuring device (23) for enabling adjusting individual angles especially 0°, 90°, 180° and 270° of the rotatable table (16) more exactly than by means of the first measuring device (24) and a fourth measuring device (36) for measuring the starting position of the first slide (12) in relation to the work spindle (19) in the X-direction, said fourth measuring device in conjunction with said second measuring device enabling adjustment of the axis (18) of the rotatable table (12) in relation to the axis (19) of the workspindle (17) at a common intersection point.

2. Apparatus as defined in claim 1 wherein said third measuring device (23) comprises four measuring value transmitters (20), said four measuring value transmitters (20) being mounted so as to be substantially uniformly distributively arranged at the circumference of the rotatable table (16), and a measuring value sender (21) which is secured at the first slide (12).

3. Apparatus as defined in claim 1, wherein a guide rail (29) is provided for said second slide (15), the fourth measuring device (36) comprises a measuring value sender (34) attached at the second slide (15) and a measuring value transmitter (35) which is secured in the form of a precision rod at said guide rail (29) of the second slide (15).

4. Apparatus as defined in claim 1, further including : a machine bed (10, 11), a fifth measuring device (38) including a measuring value sender (40) being secured at the machine bed (10, 11), a measuring value transmitter (39) attached to the first slide (12), and the fifth measuring device (38) being electrically coupled with said second measuring device (25) in order to conjointly indicate a value null when the axis (18) of the rotatable table (16) and the axis (19) of the work spindle (17) intersect.

## Revendications

1. Dispositif de positionnement d'une pièce sur une machine-outil notamment une perçeuse horizontale, comportant une table tournante (16) qui est mobile dans la direction X sur un premier chariot (12), une broche de travail (17) qui est mobile dans la direction Y sur un second chariot (15), et en position de sortie du premier chariot (12), l'axe (18) de la table tournante coupe l'axe (19) de la broche de travail, avec une première installation de mesure (24) pour tourner la table tournante (16) de n'importe quel angle souhaité et une seconde installation de mesure (25) pour déplacer la table tournante (16) de n'importe quelle distance souhaitée dans la direction (X), dispositif caractérisé par une troisième installation de mesure (23) qui permet de régler différents angles distincts notamment 0°, 90°, 180° et 270° de façon plus précise qu'à l'aide de la première installation de mesure (24) et une quatrième installation de mesure (36) qui mesure le déplacement de la position de l'axe de la broche de travail (19) dans la direction (X) et ainsi le déplacement de l'axe de la broche de travail (19) par rapport à l'axe (18) de la table tournante c'est-à-dire par rapport à la position de sortie mentionnée, de façon qu'en combinaison avec la seconde installation de mesure (25), on règle l'axe (18) de la table tournante par rapport à l'axe (19) de la broche de travail sur un point d'intersection commun.

2. Dispositif selon la revendication 1, caractérisé en ce que la troisième installation de mesure (23) comporte quatre capteurs de grandeur de mesure (20), qui sont fixés sur la table tournante (16) en étant fixés régulièrement à la périphérie, ainsi que d'un générateur de grandeur de mesure (21) qui est fixé au premier chariot (12).

3. Dispositif selon la revendication 1, caractérisé en ce que la quatrième installation de mesure (36) comporte un générateur de grandeur de mesure (34) fixé au second chariot (15) ainsi qu'un générateur de grandeur de mesure (35) qui se présente sous la forme d'une tige de précision fixée sur un rail de guidage (29) du second chariot (15).

4. Dispositif selon la revendication 1, caractérisé par une cinquième installation de mesure (38) avec un capteur de grandeur de mesure (39) fixé au premier chariot (12) et un générateur de grandeur de mesure (40) fixé au bâti (10, 11) de la machine, cette cinquième installation de mesure (38) étant couplée électriquement à la seconde installation de mesure (25) pour indiquer en commun la grandeur « 0 » lorsque l'axe (18) de la table tournante et l'axe (19) de la broche de travail se coupent.

FIG. 1

1

FIG. 2

FIG. 3

2

FIG. 4

FIG. 5

FIG. 6